# EUROPEAN PATENT SPECIFICATION

(11) **EP 3 145 152 B1**
(45) Date of publication and mention of the grant of the patent: **26.09.2018**
(21) Application number: 16176449.3
(22) Date of filing: 27.06.2016
(51) Int. Cl.: G06Q 20/32, H04W 12/02, H04L 29/06, H04W 4/12, H04W 12/08, H04W 4/14

(54) **SHORT MESSAGE SERVICE READING METHOD AND DEVICE**
KURZNACHRICHTENDIENSTLESEVERFAHREN UND -VORRICHTUNG
PROCÉDÉ ET DISPOSITIF DE LECTURE DE SERVICE DE MESSAGES COURTS

(30) Priority: 18.09.2015 CN 201510599836
(43) Date of publication of application: 22.03.2017
(73) Proprietor: Xiaomi Inc., Beijing 100085 (CN)
(72) Inventor: Hong, Feng, Haidian District, Beijing 100085 (CN); Zhao, Jiankai, Haidian District, Beijing 100085 (CN); Yang, Wankun, Haidian District, Beijing 100085 (CN); Zhang, Jianchun, Haidian District, Beijing 100085 (CN)
(74) Representative: Grunert, Marcus

(56) References cited:
- WO-A1-2013/055501
- US-A1- 2012 192 287
- US-B2- 9 043 918

## Description

### TECHNICAL FIELD

The present disclosure relates to the field of information security, particularly to a method and device for reading an Short Message Service (SMS).

### BACKGROUND

At present, a common authentication method is to perform safety verification by using a verification code carried in an SMS.

In an Android operating system, a third party application may be authorized to read an SMS, and when the third party application is a malicious application, the third party application may read a verification code in the SMS so as to acquire an authority of executing a sensitive operation, such as an authority of executing a payment operation, and an authority of executing registration and login and so on.

The embodiments of the present disclosure are presented to solve the problem that a malicious application can read a verification code in an SMS to acquire an authority of executing a sensitive operation due to the reason that a third party application only having an SMS reading authority at the operating system level can read the SMS content in an SMS component.
WO 2013/055501A1 discloses a system and method for providing threshold levels on privileged resource usage in a mobile network environment.
US 2012/192287A1 discloses systems and methods for protecting text messages. A sending device inserts security information in a text message, and sends the text message to a receiving device. The receiving device detects an attempt by an end user to access the text message. When this occurs, the receiving device parses the text message to identify the security information inserted in the text message, and controls access to the text message by the end user based on the security information.

### SUMMARY

Accordingly, the present invention provides a Short Message Service (SMS) reading method and device, and a computer program in accordance with the independent claims.

A method for reading a SMS is provided according to a first aspect of the embodiments of the present disclosure. The method includes that:
a reading request of reading an SMS is received from a third party application;
when the SMS is an SMS carrying sensitive information, whether a reading time of the reading request is in an access prohibition period of the SMS is detected; and
when the reading time is in the access prohibition period, the reading request is not responded.

In an advantageous embodiment, the step that whether a reading time of the reading request is in an access prohibition period of the SMS is detected may include that:
whether a time difference between the reading time of the reading request and a receiving time of the SMS is smaller than a preset threshold is detected; and
when the time difference is smaller than the preset threshold, it is determined that the reading time is in the access prohibition period.

In an advantageous embodiment, the method may further include that:
the preset threshold is set according to a default active duration;
or,
an active duration of the SMS is extracted from an SMS content of the SMS, and the preset threshold is set according to the active duration.

In an advantageous embodiment, the method may further include that:
whether the received SMS is an SMS carrying sensitive information is identified; and
when the SMS is an SMS carrying sensitive information, a preset marker is added to the SMS, wherein the preset marker is for indicating that the SMS is an SMS carrying sensitive information.

In an advantageous embodiment, the step that whether the received SMS is an SMS carrying sensitive information is identified may include that:
whether the SMS is an SMS carrying sensitive information is identified according to characteristic information of the SMS, wherein the characteristic information includes at least one of a sender number, an SMS content and an SMS template.

In an advantageous embodiment, the step that a reading request of reading an SMS is received from a third party application may include that:
the reading request of reading the SMS is received from the third party application through an operating system;
whether the third party application has an SMS reading authority is detected through the operating system;
when the third party application has the SMS reading authority, the reading request is forwarded to an SMS component through the operating system; and
the reading request forwarded by the operating system is received through the SMS component.

In an advantageous embodiment, the method may further include that:
a reading request of reading the SMS is received from a default SMS application of the operating system; and
the reading request of the default SMS application is responded.

A method for reading an SMS is provided according to a second aspect of the embodiments of the present disclosure. The method includes that:
a third party application reads a common SMS, wherein a time difference between a reading time of the common SMS and a receiving time of the common SMS is smaller than a preset duration; and
the third party application reads an SMS carrying sensitive information, wherein a time difference between a reading time of the SMS and a receiving time of the SMS is larger than the preset duration.

In an advantageous embodiment, the method may further include that:
a default SMS application of an operating system reads the SMS, wherein the time difference between the reading time of the SMS and the receiving time of the SMS is smaller than the preset duration.

In an advantageous embodiment, the preset duration is equal to or larger than an active duration of the SMS.

A device for reading a SMS is provided according to a third aspect of the embodiments of the present disclosure. The device includes:
a request receiving module, configured to receive from a third party application a reading request of reading an SMS;
a time detecting module configured to detect, when the SMS is an SMS carrying sensitive information, whether a reading time of the reading request is in an access prohibition period of the SMS; and
a request responding module configured to make, when the reading time is in the access prohibition period, no response to the reading request.

In an advantageous embodiment, the time detecting module may include:
a difference detecting sub-module, configured to detect whether a time difference between the reading time of the reading request and a receiving time of the SMS is smaller than a preset threshold; and
a time determining sub-module configured to, when the time difference is smaller than the preset threshold, determine that the reading time is in the access prohibition period.

In an advantageous embodiment, the device may further include:
a threshold setting module, configured to set the preset threshold according to a default active duration;
or,
the threshold setting module is further configured to extract an active duration of the SMS from an SMS content of the SMS, and set the preset threshold according to the active duration.

In an advantageous embodiment, the device may further include:
an SMS identifying module, configured to identify whether the received SMS is an SMS carrying sensitive information; and
a marker adding module configured to add, when the SMS is an SMS carrying sensitive information, a preset marker to the SMS, wherein the preset marker is for indicating that the SMS is an SMS carrying sensitive information.

In an advantageous embodiment, the SMS identifying module may be further configured to identify, according to characteristic information of the SMS, whether the SMS is an SMS carrying sensitive information, wherein the characteristic information comprises at least one of a sender number, an SMS content and an SMS template.

In an advantageous embodiment, the request receiving module may include:
a reading receiving sub-module, configured to receive from the third party application the reading request of reading the SMS through an operating system;
an authority detecting sub-module configured to detect, through the operating system, whether the third party application has an SMS reading authority;
a request forwarding sub-module configured to forward, when the third party application has the SMS reading authority, the reading request to an SMS component through the operating system; and
an information receiving sub-module configured to receive, through the SMS component, the reading request forwarded by the operating system.

In an advantageous embodiment, the device may further include:
a default receiving module, configured to receive, from a default SMS application of the operating system, a reading request of reading the SMS; and
a default responding module, configured to respond to the reading request of the default SMS application.

A device for reading a SMS is provided according to a fourth aspect of the embodiment of the present disclosure. The device includes:
a common reading module, configured to read a common SMS for a third party application, wherein a time difference between a reading time of the common SMS and a receiving time of the common SMS is smaller than a preset duration; and
a sensitive reading module configured to read an SMS carrying sensitive information for the third party application, wherein a time difference between a reading time of the SMS and a receiving time of the SMS is larger than the preset duration.

In an advantageous embodiment, the device may further include:
a default reading module, configured to read the SMS for a default SMS application of an operating system, wherein the time difference between the reading time of the SMS and the receiving time of the SMS is smaller than the preset duration.

In an advantageous embodiment, the preset duration may be equal to or larger than an active duration of the SMS.

A device for reading a SMS is provided according to a fifth aspect of the embodiment of the present disclosure. The device includes:
a processor; and
a memory, configured to store an instruction executable by the processor;
wherein the processor is configured to:
receive from a third party application a reading request of reading an SMS;
when the SMS is an SMS carrying sensitive information, detect whether a reading time of the reading request is in an access prohibition period of the SMS; and
when the reading time is in the access prohibition period, not respond to the reading request. Particularly, the processor is configured to include the request receiving module, the time detecting module, and the request responding module.

A device for reading a SMS is provided according to a sixth aspect of the embodiment of the present disclosure. The device includes:
a processor; and
a memory, configured to store an instruction executable by the processor;
wherein the processor is configured to:
read a common SMS for a third party application, wherein a time difference between a reading time of the common SMS and a receiving time of the common SMS is smaller than a preset duration; and
read an SMS carrying sensitive information for the third party application, wherein a time difference between a reading time of the SMS and a receiving time of the SMS is larger than the preset duration. Particularly, the processor is configured to include the common reading module, and the sensitive reading module.

In one particular embodiment, the steps of the method for reading an SMS are determined by computer program instructions.

Consequently, the invention is also directed to a computer program for executing the steps of a method for reading an SMS according to the first and/or second aspect of the invention as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present disclosure bring the following beneficial effects.

A reading request of reading an SMS is received from a third party application; when the SMS is an SMS carrying sensitive information, whether a reading time of the reading request is in an access prohibition period of the SMS is detected, and when the reading time is in the access prohibition period, the reading request is not responded, so that the problem that a malicious application can read a verification code in an SMS to acquire an authority of executing a sensitive operation due to the reason that a third party application only having an SMS reading authority at the operating system level can read the SMS content in an SMS component is solved, and for an SMS carrying sensitive information, a third party application cannot read the SMS content of the SMS during an access prohibition period, thus avoiding leakage of the sensitive information in the SMS during the access prohibition period while implementing authority control over a single SMS granularity.

It is to be understood that both the foregoing general description and the following detailed description are exemplary and explanatory only and are not restrictive of the invention, as claimed.

### BRIEF DESCRIPTION OF THE DRAWINGS

Accompanying drawings that are needed to be used in the description of the embodiments will be introduced briefly hereinafter so that the technical solutions in the embodiments of the present disclosure can be described more clearly. Apparently, the accompanying drawings in the following description are only some embodiments of the present disclosure. For those of ordinary skill in the art, other accompanying drawings may be also obtained according to these accompanying drawings without creative efforts.
Fig. 1 is a schematic diagram of components of a mobile terminal according to an exemplary embodiment;
Fig. 2 is a flowchart of an SMS reading method according to an exemplary embodiment;
Fig. 3A is a flowchart of an SMS reading method according to another exemplary embodiment;
Fig. 3B is a flowchart of sub-steps of an SMS reading method according to still another exemplary embodiment;
Fig. 4A is a schematic diagram of an interface illustrating an SMS reading method according to an exemplary embodiment;
Fig. 4b is a schematic diagram of an interface illustrating an SMS reading method according to another exemplary embodiment;
Fig. 5 is a flowchart of an SMS reading method according to still another exemplary embodiment;
Fig. 6 is a flowchart of an SMS reading method according to still another exemplary embodiment;
Fig. 7A is a schematic diagram of an interface for reading an SMS according to an exemplary embodiment;
Fig. 7B is a schematic diagram of an interface for reading an SMS according to another exemplary embodiment;
Fig. 8 is a block diagram of an SMS reading device according to an exemplary embodiment;
Fig. 9 is a block diagram of an SMS reading device according to another exemplary embodiment;
Fig. 10 is a block diagram of an SMS reading device according to still another exemplary embodiment;
Fig. 11 is a block diagram of an SMS reading device according to still another exemplary embodiment; and
Fig. 12 is a block diagram of an SMS reading device according to an exemplary embodiment.

### DETAILED DESCRIPTION

The embodiments of the present disclosure will be further expounded hereinafter with reference to the accompanying drawings so that the purposes, technical solutions and advantages of the embodiments of the present disclosure are clearer.

Several terms involved in the embodiments of the present disclosure will be introduced briefly first.

Android operating system: a Linux-based operating system of free and open source codes, which is produced by Google and mainly applied to a mobile terminal. The mobile terminal may be a mobile phone, a tablet computer, an electronic book reader, a Moving Picture Experts Group Audio Layer III (MP3) player, a Moving Picture Experts Group Audio Layer IV (MP4) player, a portable laptop computer and so on.

Application: an application generally includes at least one program component in an Android operating system. There are four program components, which are an activity component, a service component, a content provider component and a broadcast receiver component.

Activity component: which is a component responsible for interacting with a user in an android application and providing a visible user interface for the Android application. One Android application may include more than one activity components.

Service component: which is a component operating in the background and not providing a user interface in an Android application. One Android application may include more than one service components.

Content provider component: which is a component configured to provide data, such as an SMS, a tone, a piece of wallpaper, contacts and so on, for other applications or for other components in a current application in an Android application. The content provider component may encapsulate data in various formats and provide the data to other applications or components in a standard form, wherein an SMS component in the embodiments of the present disclosure is a content provider component.

Broadcast receiver component: which is configured to receive and respond to a message which is broadcast by an operating system. The broadcast receiver component is able to receive a message of interest (or a message of a predefined message type) and then process and forward the message to other components in a current application.

Third party application: which is an application that is rather than preinstalled applications of an operating system in a mobile terminal.

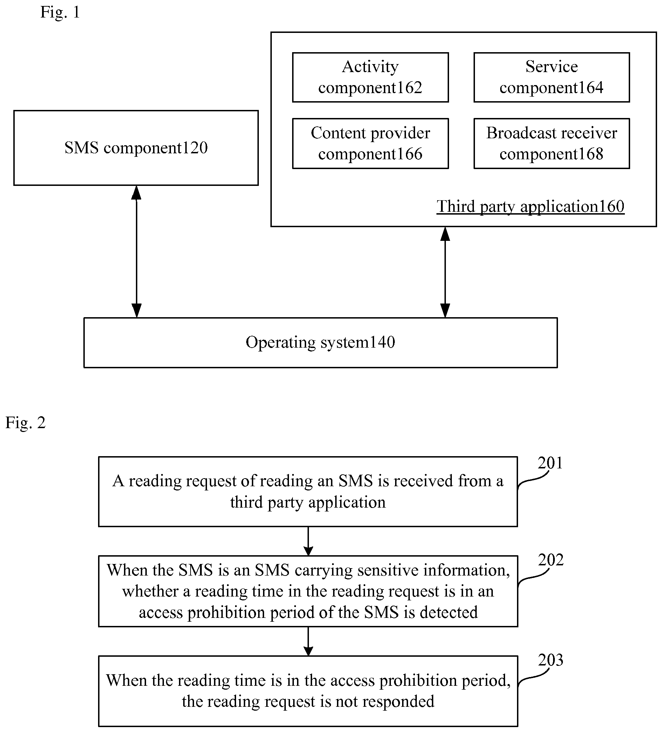

To facilitate understanding, please refer to Fig. 1 first, which shows a schematic diagram of components of a mobile terminal according to an exemplary embodiment. The mobile terminal includes an SMS component 120, an operating system 140 and a third party application 160. The operating system 140 receives a reading request from the third party application 160, and forwards the reading request to the SMS component 120.

The mobile terminal may be a mobile phone, a tablet computer, an electronic book reader, an MP3 player, an MP4 player, a portable laptop computer and so on.

The SMS component 120 is a content provider component in an Android application and configurd to provide SMS data for other applications or other components in a current application. The SMS component 120 may receive SMSs from a source party, and store received SMSs to form an SMS list.

The operating system 140 pre-stores a configuration file, and the configuration file stores an SMS reading authority of the third party application 160 at the operating system level.

Alternatively, the operating system 140 stores a general configuration file. The configuration file stores SMS reading authorities of all third party applications 160 at the operating system level.

Alternatively, the operating system 140 stores a plurality of configuration files, and the SMS reading authority of each third party application 160 at the operating system level respectively corresponds to a configuration file.

The third party application 160, when having the SMS reading authority at the operating system level, can read all SMSs in the SMS component 130, and the third party application 160 without the SMS reading authority at the operating system level cannot read any SMS in the SMS component 120.

The third party component 160 may include one or more program components, each of which may be any one of followings: an activity component 162, a service component 164, a content provider component 166 and a broadcast receiver component 168.

When the third party application 160 needs to read an SMS in the short message component 120, the third party application 160 sends a reading request of reading the SMS to the operating system 140 first. After receiving the reading request, the operating system 140 detects whether the third party application 160 is in an SMS reading authority list, and when the third party application 160 is in the SMS reading authority list, the operating system 140 forwards to the SMS component 120 the SMS reading request sent by the third party application 160. After receiving the reading request forwarded by the operating system 140, the SMS component 120 searches the SMS list, according to the SMS that needs to be read according to the reading request, for the SMS that needs to be read, and feeds back the found SMS to the third party application 160 through the operating system 140.

Fig. 2 is a flowchart of an SMS reading method according to an exemplary embodiment. The present embodiment illustrates the SMS reading method applied in the mobile terminal as shown in Fig. 1 as an example. The SMS reading method includes several steps as follows.

Step 201: A reading request of reading an SMS is received from a third party application.

The third party application is an application in a configuration file of an operating system, and the configuration file is a file for performing authority control according to an application granularity.

Step 202: When the SMS is an SMS carrying sensitive information, whether a reading time of the reading request is in an access prohibition period of the SMS is detected.

The access prohibition period is a period in which the third party application does not have access.

Step 203: When the reading time is in the access prohibition period, the reading request is not responded.

To sum up, in the SMS reading method provided in the embodiment of the present disclosure, a reading request of reading an SMS is received from a third party application; when the SMS is an SMS carrying sensitive information, whether a reading time of the reading request is in an access prohibition period of the SMS is detected, and when the reading time is in the access prohibition period, the reading request is not responded, so that the problem that a malicious application can read a verification code in an SMS to acquire an authority of executing a sensitive operation due to the reason that a third party application only having an SMS reading authority at the operating system level can read all SMSs in an SMS component is solved, and for an SMS carrying sensitive information, a third party application cannot read the SMS content of the SMS during an access prohibition period, thus avoiding leakage of the sensitive information in the SMS during the access prohibition period while implementing authority control for a single SMS granularity.

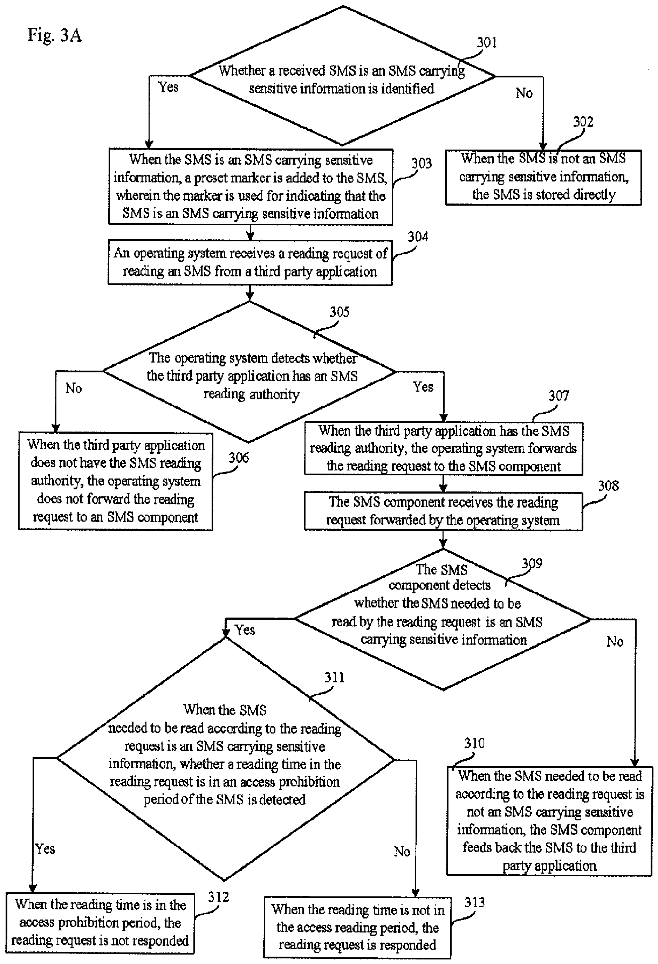

Fig. 3A is a flowchart of an SMS reading method according to another exemplary embodiment. The present embodiment illustrates the SMS reading method applied in the mobile terminal as shown in Fig. 1 as an example. The SMS reading method includes several steps as follows.

Step 301: Whether a received SMS is an SMS carrying sensitive information is identified.

The sensitive information is information related to virtual properties and/or a control authority of a user in a network.

The SMS component receives an SMS from an SMS source party and identifies the received SMS so as to identify whether the SMS carries sensitive information.

The step that the SMS component identifies the SMS may include that the SMS component identifies, according to characteristic information of the SMS, whether the SMS is an SMS carrying sensitive information, wherein the characteristic information includes at least one of a sender number, an SMS content and an SMS template.

Step 302: When the SMS is not an SMS carrying sensitive information, the SMS is stored directly.

Step 303: When the SMS is an SMS carrying sensitive information, a preset marker is added to the SMS, wherein the marker is used for indicating that the SMS is an SMS carrying sensitive information.

When it is found by the SMS component that the SMS is an SMS carrying sensitive information, the SMS component adds a preset marker to the SMS to indicate that the SMS is an SMS carrying sensitive information.

Step 304: The operating system receives from a third party application a reading request of reading an SMS.

When the third party application needs to read an SMS in the SMS component, the third party application sends a reading request of reading the SMS to the operating system first. Accordingly, the operating system receives the reading request of reading the SMS from the third party application.

Here, the third party application may be an SMS-class application, a payment-class application, a registration-class application, and so on.

Step 305: The operating system detects whether the third party application has an SMS reading authority.

The operating system pre-stores SMS reading authorities of third party applications, and when receiving a reading request of reading an SMS from a third party application, the operating system acquires a pre-stored authority list first, and detects whether the third party application is in the pre-stored authority list. When the third party application is in the pre-stored authority list, the third party application has an SMS reading authority. Otherwise, the third party application does not have the SMS reading authority.

Step 306: When the third party application does not have the SMS reading authority, the operating system does not forward the reading request to the SMS component.

Step 307: When the third party application has the SMS reading authority, the operating system forwards the reading request to the SMS component.

When it is detected by the operating system that the third party application has the SMS reading authority at the operating system level, the operating system forwards the reading request of the third party application to the SMS component.

Step 308: The SMS component receives the reading request forwarded by the operating system.

The SMS component receives the reading request forwarded by the operating system.

For example, a third party application "Xiaomi Mall" sends to the operating system, an SMS of reading a payment password of "Xiaomi payment" in the SMS component, then after receiving the reading request, the operating system detects whether "Xiaomi Mall" has an SMS reading authority in the operating system, and when "Xiaomi Mall" has the SMS reading authority, forwards the reading request sent by "Xiaomi Mall" to the SMS component, and the SMS component receives the reading request forwarded by the operating system.

Step 309: The SMS component detects whether the SMS needed to be read according to the reading request is an SMS carrying sensitive information.

The SMS component acquires, according to the received reading request, the SMS needed to be read according to the reading request and detects whether the SMS needed to be read according to the reading request carries a preset marker. When the preset marker is carried, the SMS is an SMS carrying sensitive information, and otherwise, the SMS is not an SMS carrying sensitive information.

Step 310: When the SMS needed to be read according to the reading request is not an SMS carrying sensitive information, the SMS component feeds back the SMS to the third party application.

Step 311: When the SMS needed to be read according to the reading request is an SMS carrying sensitive information, whether a reading time of the reading request is in an access prohibition period of the SMS is detected.

The SMS component acquires, from the reading request forwarded by the operating system, the SMS that needs to be read, and detects, according to characteristic information of the SMS, whether the SMS that needs to be read is an SMS carrying sensitive information. When the SMS in the reading request is an SMS with a preset marker in the SMS component, the SMS component detects whether a reading time of the reading request is in an access prohibition period of the SMS.

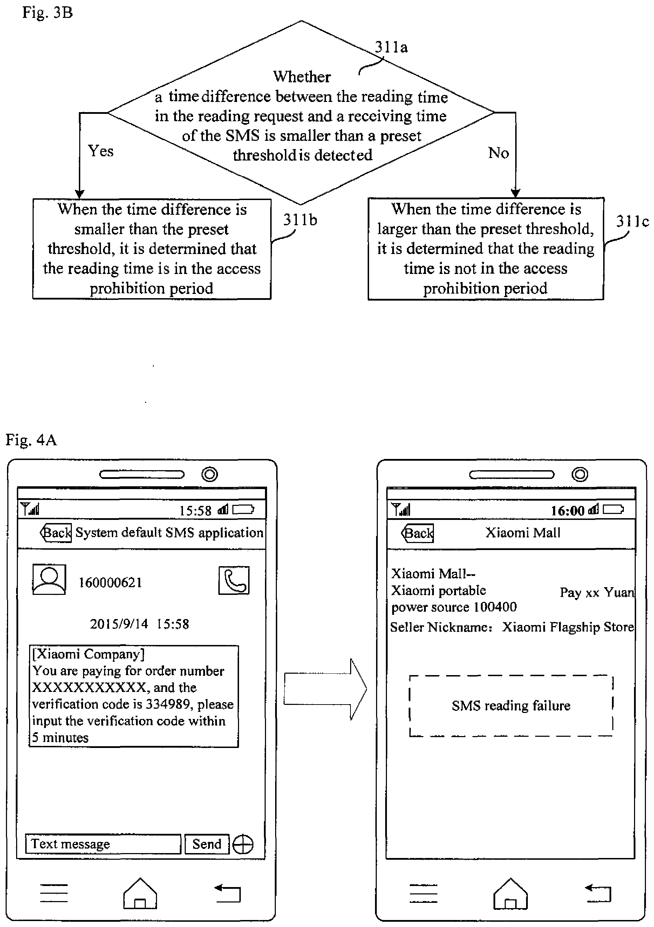

In the present embodiment, Step 311 may include the following sub-steps, as shown in Fig. 3B.

Step 311a: Whether a time difference between the reading time of the reading request and a receiving time of the SMS is smaller than a preset threshold is detected.

When the SMS in the reading request is an SMS with a preset marker in the SMS component, the SMS component acquires a reading time in the reading request, calculates a difference between the reading time in the reading request and a receiving time of the SMS that needs to be read to acquire a time difference between the two, and performs detection to compare the acquired time difference with a preset threshold.

Alternatively, the preset threshold may be set according to the following methods.

First, the preset threshold is set according to a default active duration.

Generally, an active duration of a verification code is 60 seconds, and an active duration of an activation code is 1 hour.

Second, an active duration of the SMS is extracted from an SMS content of the SMS, and the preset threshold is set according to the active duration.

When the SMS component receives the SMS, an SMS content of the SMS carries an active duration of the SMS, then the SMS component sets the preset threshold according to the active duration in the SMS content of the SMS.

Step 311b: When the time difference is smaller than the preset threshold, it is determined that the reading time is in the access prohibition period.

When the time difference between the reading time in the reading request and the receiving time of the SMS that needs to be read is smaller than the preset threshold, then the SMS component determines that the reading time is in the access prohibition period.

Exemplarily, provided that the SMS component receives, at 10:58, an SMS carrying sensitive information, and a reading time in a received reading request forwarded by the operating system is 11:00, then a time difference between the reading time and the receiving time of the SMS is 1:00-10:58=2 minutes=120 seconds.

Exemplarily, the preset threshold is set according to a default active duration which is 60 seconds, and it is determined that the reading time is not in the access prohibition period since a duration of 120 seconds is longer than the preset threshold that is 60 seconds.

Exemplarily, the active duration of the SMS, which is extracted from the SMS content of the SMS, is 5 minutes. Since a duration of 2 minutes is shorter than the preset threshold that is 5 minutes, it is determined that the reading time is in the access prohibition period.

Alternatively, whether the reading time is in the access prohibition period may be further detected according to the following method.

When identifying that the SMS is an SMS carrying sensitive information, the SMS component puts the access prohibition period of the SMS into a countdown state according to a preset threshold. When receiving the reading request, the SMS component acquires the reading time in the reading request, and when the reading time is in a countdown period, determines that the reading time is in the access prohibition period.

Step 311c: When the time difference is larger than the preset threshold, it is determined that the reading time is not in the access prohibition period.

When the time difference between the reading time in the reading request and the receiving time of the SMS that needs to be read is larger than the preset threshold, the SMS component determines that the reading time in the reading request is not in the access prohibition period.

Step 312: When the reading time is in the access prohibition period, the reading request is not responded.

When the reading time in the reading request of the third party application is in the access prohibition period, the SMS component does not respond to the reading request.

Step 313: When the reading time is not in the access reading period, the reading request is responded.

When the reading time in the reading request of the third party application is not in the access prohibition period, the SMS component responds to the reading request.

It needs to be noted that: Step 301 to Step 303 and Step 304 to Step 308 in the present embodiment are not limited to specific sequences in the present embodiment. In other words, the step that the SMS component identifies whether the SMS is an SMS carrying sensitive information may be performed after the step that the reading request forwarded by the operating system is received, and whether the SMS is an SMS carrying sensitive information may be pre-identified before the reading request forwarded by the operating system is received.

To sum up, in the SMS reading method provided in the embodiment of the present disclosure, a reading request of reading an SMS is received from a third party application; when the SMS is an SMS carrying sensitive information, whether a reading time in the reading request is in an access prohibition period of the SMS is detected, and when the reading time is in the access prohibition period, the reading request is not responded, so that the problem that a malicious application can read a verification code in an SMS to acquire an authority of executing a sensitive operation due to the reason that a third party application only having an SMS reading authority at the operating system level can read all SMSs in an SMS component is solved, and for an SMS carrying sensitive information, a third party application cannot read an SMS content of the SMS during an access prohibition period, thus avoiding leakage of the sensitive information in the SMS during the access prohibition period while implementing authority control for a single SMS granularity.

An access prohibition period using a single SMS as a granularity is added only in the SMS component, thereby implementing authority control over a single SMS granularity, and achieving the effect that a third party application cannot read an SMS in the SMS component in the access prohibition period. In the meanwhile, the method is simple and convenient to operate and easy to implement.

In the embodiment of Fig. 3A, the SMS component identifies whether the SMS is an SMS carrying sensitive information according to several methods as follows in Step 301.

Alternatively, the SMS component may identify, according to a sender number of the received SMS, whether the SMS carries sensitive information. Generally, a list is stored in an SMS background server. For example, the list stores company A and SMS number 1 and SMS number 2 which are SMS numbers corresponding to company A, company B and SMS number 3 and SMS number 4 which are SMS numbers corresponding to company B, company C and SMS number 5 and SMS number 6 which are SMS numbers corresponding to company C, and so on.

Exemplarily, the list stored in the SMS background server is as shown in the following Table 1.

**Table 1**

| Company name | SMS number |
|---|---|
| Company A | SMS number 1 |
| | SMS number 2 |
| Company B | SMS number 3 |
| | SMS number 4 |
| Company C | SMS number 5 |
| | SMS number 6 |

When the sender number of the SMS received by the SMS component is SMS number 5, it can be learned from the corresponding relations in Table 1 that a source party of the SMS is company C, and the SMS component identifies the SMS as an SMS carrying sensitive information.

Alternatively, the SMS component may identify, according to an SMS content of the received SMS, whether the SMS carries sensitive information. For example, the SMS content is "[Asan Travel · Go] 06-22 07:15 Kunming Changshui Airport--take-off-08:55 and Chongqing Jiangbei Airport 2B landing Lucky Airlines 8L9863, Order XXXXXXXXXXX, paying, Zhang Wuji (Ticket number: XXX-XXXXXXXXXX). Click on http://tb.cn/3eXI06y, and check details of the flight on the client.", then the SMS component identifies, according to keywords [Asan Travel · Go] in the SMS content, that the SMS is an SMS carrying sensitive information.

Alternatively, the SMS component may also identify, according to an SMS template, whether the SMS carries sensitive information. For example, the SMS component pre-stores a plurality of SMS templates carrying sensitive information. When the SMS is received, the SMS component matches the received SMS with a stored SMS template. When the received SMS is matched with a certain SMS template, the SMS is identified as an SMS carrying sensitive information.

For example, SMS 1: sender: 140000621 "[Company A] order number XXXXXXXXXXX, paying, the verification number is XXXXXX. Click on http://tb.cn/3eXI06y, and check details on the client."

SMS 2: sender: 140000622 "[Company A] order number XXXXXXXXXXX, paying, the verification code is XXXXXX. Click on http://tb.cn/3eXI06y, and check details on the client."

SMS 1 and SMS 2 are SMSs sent by Jingdong Company, a source party identifier of SMS 1 is "140000621", a source party identifier of SMS 2 is "140000622" and the two source parties have the same prefix "1400062". In the meanwhile, the two SMSs contain a keyword "[Company A]".

Exemplarily, two SMS templates constructed by SMS 1 and SMS 2 are as follows.

<payment template 1> "[Company A]<Order number> <Verification code>."

<Payment template 2> "[Company A]< Order number > < Verification code>."

Exemplarily, corresponding relations between extracted templates and combinations of identification characteristics and keywords of the senders of the SMSs are as shown in the following Table 2.

**Table 2**

| SMS characteristic | SMS template |
|---|---|
| 14000062X+[Company A] | <payment template 1> |
| 14000062X+[Company A] | <payment template 2> |

When the SMS received by the SMS component carries a characteristic of "14000062X+[Company A]", the SMS will be matched with <payment template 2> in the SMS templates. Therefore, the SMS component identifies the SMS as an SMS carrying sensitive information.

For example, after a product is purchased in Xiaomi Mall, an order is submitted by clicking, acquisition of a verification code from a mobile phone is selected during payment, and a mobile phone bound with the website of Xiaomi Mall will receive a verification code SMS sent by Xiaomi Company within 60 seconds. Provided that an SMS received at 15:58 is: Sender: 160000621 "[Xiaomi Company] Order number XXXXXXXXXXX paying, the verification code is XXXXXX, please input the verification code within 5 minutes."

A third party application "Xiaomi Mall" sends a reading request to the operating system. The operating system forwards the reading request sent by the third party application to the SMS component. The SMS component acquires that a reading time in the reading request is 16:00. A time difference between the reading time and the receiving time of the SMS is 16:00-15:58=2 minutes. Since a duration of 2 minutes is shorter than an active duration that is 5 minutes, the third party application "Xiaomi Mall" fails to read the SMS, as shown in Fig. 4A.

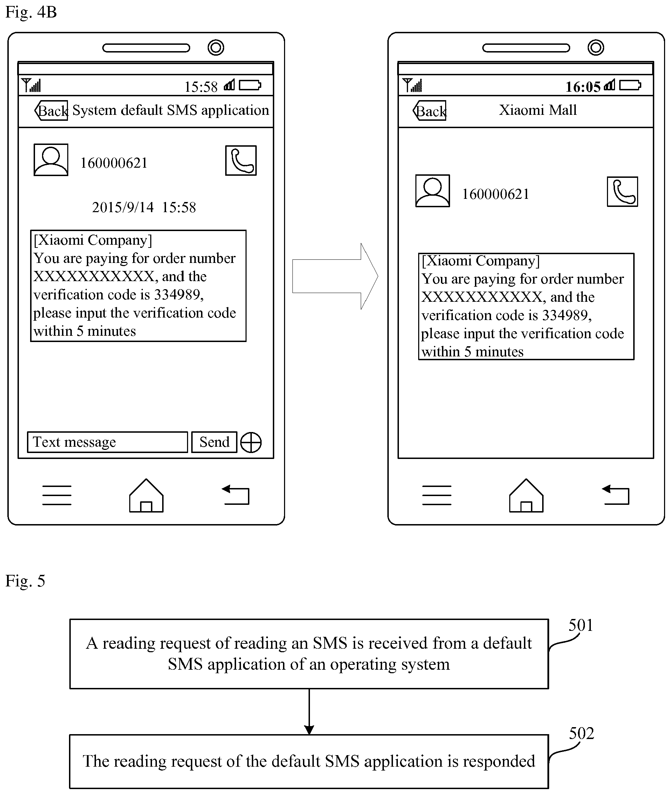

When the SMS component acquires that a reading time in the reading request is 16:05, a time difference between the reading time and the receiving time of the SMS is 16:05-15:58=7 minutes. Since a duration of 7 minutes is longer than the active duration that is 5 minutes, the third party application "Xiaomi Mall" reads the SMS successfully. In other words, the third party application can read the SMS content of the SMS, as shown in Fig. 4B.

In the embodiment of Fig. 3A, all reading requests forwarded by the operating system to the SMS component are reading requests sent by third party applications while a default SMS application of the operating system may also read an SMS content of the SMS component, please refer to the following steps, as shown in Fig. 5.

Step 501: A reading request of reading the SMS is received from a default SMS application of the operating system.

The SMS component receives a reading request from a default SMS application of the operating system, so as to read an SMS in the SMS component.

Step 502: The reading request of the default SMS application is responded.

After receiving the reading request from the default SMS application, the SMS component responds to the reading request directly.

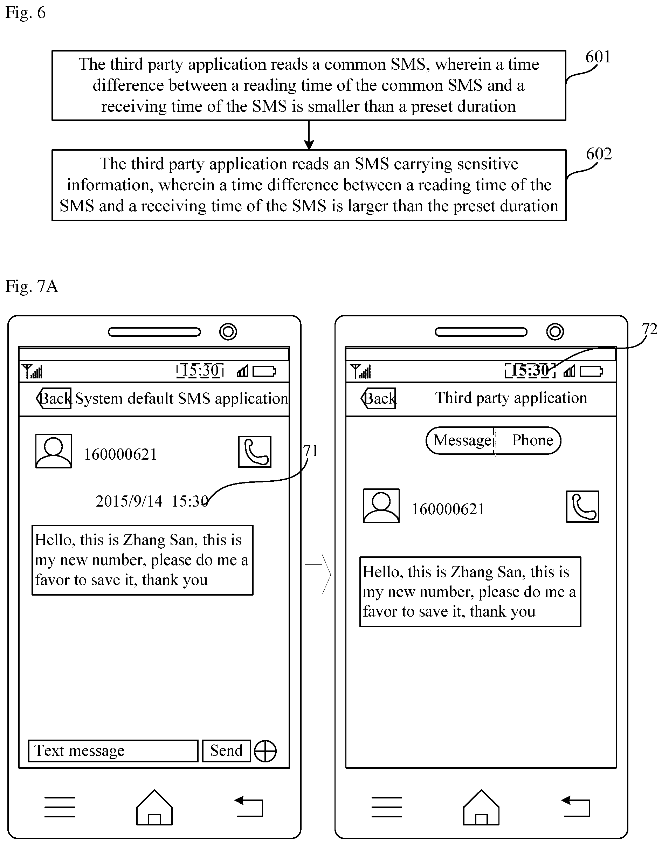

Since SMSs in the SMS component are divided into SMSs carrying sensitive information and common SMSs, there are two situations in which the third party application reads an SMS in the SMSs, please refer to the following steps, as shown in Fig. 6.

Step 601: The third party application reads a common SMS, wherein a time difference between a reading time of the common SMS and a receiving time of the SMS is smaller than a preset duration.

The common SMS refers to an SMS not carrying sensitive information. The third party application only needs to have an SMS reading authority at the operating system level so as to read the common SMS in the SMS component.

Generally, the reading time refers to the time when an SMS content is read. Since the common SMS is read in a relatively short period of time and can be displayed immediately after being read, the reading time may be also the time when the SMS is displayed for the first time on a display interface.

The third party application sends a reading request of reading the common SMS to the operating system. When the third party application has an SMS reading authority, the operation forwards the reading request to the SMS component. The SMS component directly feeds back the common SMS to the third party application. Since little time is consumed, the time difference between the reading time of the common SMS and the receiving time of the common SMS is smaller than the preset duration. Generally, the time difference is within 1 second. As shown in Fig. 7A, 71 is the receiving time of the common SMS, and 72 is the reading time of the common SMS. It may be learned from the time displayed by 72 and 71 that the time difference between the reading time and the receiving time of the SMS is generally calculated by seconds.

The preset duration is euqual to or larger than an active duration of the SMS.

Step 602: The third party application reads an SMS carrying sensitive information, wherein a time difference between a reading time of the SMS and a receiving time of the SMS is larger than the preset duration.

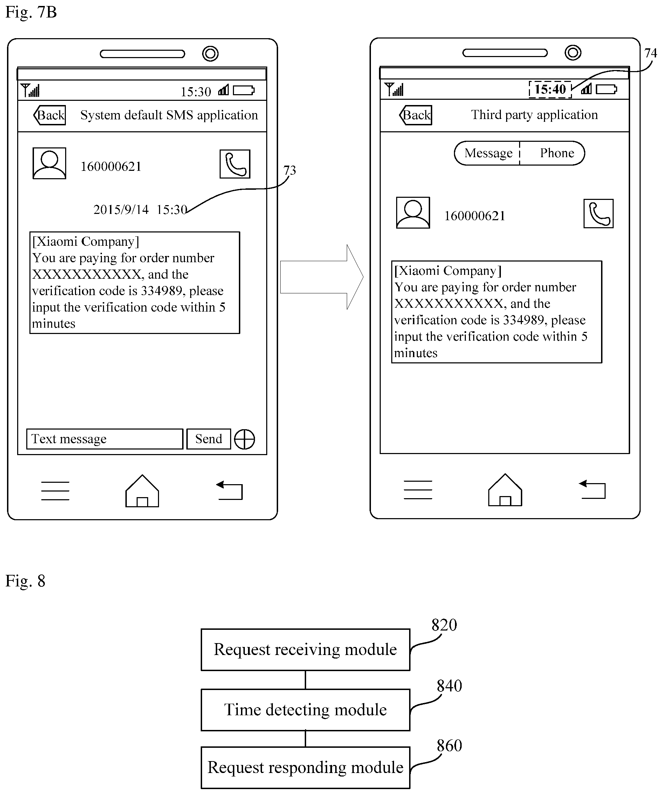

The embodiment of Fig. 3A shows a process in which the third party application reads an SMS carrying sensitive information. The third party application can acquire the SMS carrying the sensitive information in the SMS component only when a time difference between a reading time of the SMS and a receiving time of the SMS is larger than a preset duration. As shown in Fig. 7B, 73 is the receiving time of the SMS carrying the sensitive information and 74 is the reading time of the SMS carrying the sensitive information. It may be learned from the time displayed by 74 and 73 that the time difference between the reading time and the receiving time of the SMS carrying the sensitive information is 15:40-15:30=10 minutes. The time difference is larger than the preset duration and the preset duration is an active duration which is 5 minutes of a verification code in an SMS content.

In the embodiment of Fig. 6, the third party application reads an SMS in the SMS component in two situations while the default SMS application of the operating system reads an SMS in the SMS component in only one situation, please refer to the following step (not shown in Fig.6).

Step 603: The default SMS application of the operating system reads an SMS, wherein a time difference between a reading time of the SMS and a receiving time of the SMS is smaller than a preset duration.

The default SMS application of the operating system may read an SMS in the SMS component directly, thus a time difference between a reading time of the SMS and a receiving time of the SMS is smaller than a preset duration.

The following description refers to device embodiments of the present disclosure, which may be used for executing the method embodiments of the present disclosure. Please refer to the method embodiments of the present disclosure for details not disclosed in the device embodiments of the present disclosure.

Fig. 8 is a block diagram of an SMS reading device according to an exemplary embodiment. The SMS reading device may be implemented as a mobile terminal or a part of the mobile terminal by a combination of software and hardware. The SMS reading device includes, but is not limited to:
a request receiving module 820, configured to receive from a third party application a reading request of reading an SMS;
a time detecting module 840 configured to detect, when the SMS is an SMS carrying sensitive information, whether a reading time in the reading request is in an access prohibition period of the SMS; and
a request responding module 860 configured to make, when the reading time is in the access prohibition period, no response to the reading request.

To sum up, in the SMS reading device provided in the embodiment of the present disclosure, a reading request of reading an SMS is received from a third party application; when the SMS is an SMS carrying sensitive information, whether a reading time in the reading request is in an access prohibition period of the SMS is detected, and when the reading time is in the access prohibition period, the reading request is not responded, so that the problem that a malicious application can read a verification code in an SMS to acquire an authority of executing a sensitive operation due to the reason that a third party application only having an SMS reading authority at the operating system level can read all SMSs in an SMS component is solved, and for an SMS carrying sensitive information, a third party application cannot read an SMS content of the SMS during an access prohibition period, thus avoiding leakage of the sensitive information in the SMS during the access prohibition period while implementing authority control over a single SMS granularity.

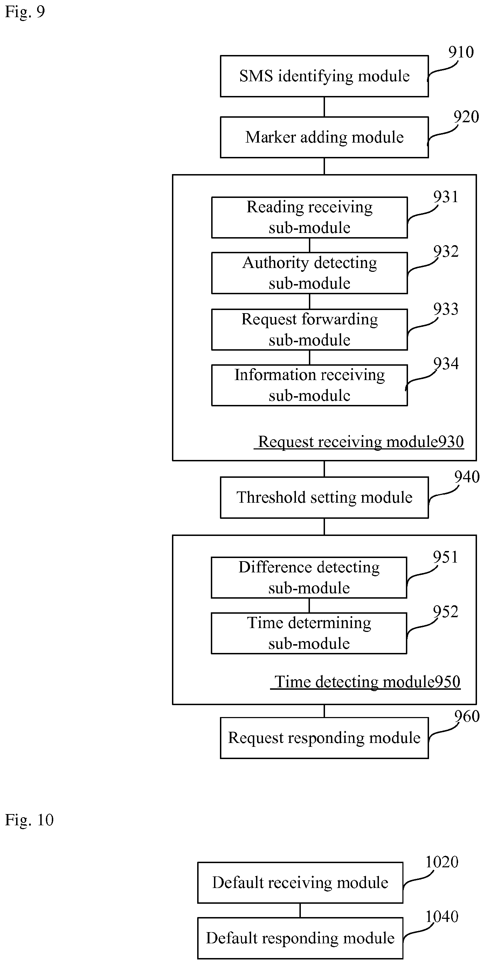

Fig. 9 is a block diagram of an SMS reading device according to another exemplary embodiment. The SMS reading device may be implemented as an entire mobile terminal or a part of the mobile terminal by combination of software or hardware. The SMS reading device includes, but is not limited to:
an SMS identifying module 910, configured to identify whether a received SMS is an SMS carrying sensitive information,
alternatively, the SMS identifying module 910 is further configured to identify, according to characteristic information of the SMS, whether the SMS is an SMS carrying sensitive information, wherein the characteristic information comprises at least one of a sender number, an SMS content and an SMS template.
a marker adding module 920 configured to add, when the SMS is an SMS carrying sensitive information, a preset marker to the SMS, wherein the preset marker is used for indicating that the SMS is an SMS carrying sensitive information; and
a request receiving module 930, configured to receive from a third party application a reading request of reading an SMS.

Alternatively, the request receiving module 930 includes:
a reading receiving sub-module 931, configured to receive, from the third party application, the reading request of reading the SMS through an operating system;
an authority detecting sub-module 932 configured to detect, through the operating system, whether the third party application has an SMS reading authority;
a request forwarding sub-module 933 configured to forward, when the third party application has the SMS reading authority, the reading request to an SMS component through the operating system;
an information receiving sub-module 934 configured to receive, through the SMS component, the reading request forwarded by the operating system;
a threshold setting module 940, configured to set a preset threshold according to a default active duration;
alternatively, the threshold setting module 940 is further configured to extract an active duration of the SMS from an SMS content of the SMS, and set the preset threshold according to the active duration; and
a time detecting module 950 configured to detect, when the SMS is an SMS carrying sensitive information, detect whether a reading time in the reading request is in an access prohibition period of the SMS.

Alternatively, the time detecting module 950 includes:
a difference detecting sub-module 951, configured to detect whether a time difference between the reading time in the reading request and a receiving time of the SMS is smaller than the preset threshold;
a time determining sub-module 952 configured to, when the time difference is smaller than the preset threshold, determine that the reading time is in the access prohibition period; and
a request responding module 960 configured to make, when the reading time is in the access prohibition period, no response to the reading request.

To sum up, in the SMS reading device provided in the embodiment of the present disclosure, a reading request of reading an SMS is received from a third party application; when the SMS is an SMS carrying sensitive information, whether a reading time in the reading request is in an access prohibition period of the SMS is detected, and when the reading time is in the access prohibition period, the reading request is not responded, so that the problem that a malicious application can read a verification code in an SMS to acquire an authority of executing a sensitive operation due to the reason that a third party application only having an SMS reading authority at the operating system level can read all SMSs in an SMS component is solved, and for an SMS carrying sensitive information, a third party application cannot read an SMS content of the SMS during an access prohibition period, thus avoiding leakage of the sensitive information in the SMS during the access prohibition period while implementing authority control for a single SMS granularity.

An access prohibition period using a single SMS as a granularity is added only to the SMS component, thereby implementing authority control over a single SMS granularity, and achieving the effect that a third party application cannot read an SMS in the SMS component in the access prohibition period. In the meanwhile, the method is simple and convenient to operate and easy to implement.

In the embodiment of Fig. 9, all reading requests forwarded by the operating system to the SMS component are reading requests sent by third party applications while a default SMS application of the operating system may also read an SMS content of the SMS component, please refer to the following modules, as shown in Fig. 10:
a default receiving module 1020, configured to receive, from a default SMS application of the operating system, a reading request of reading the SMS; and
a default responding module 1040, configured to respond to the reading request of the default SMS application.

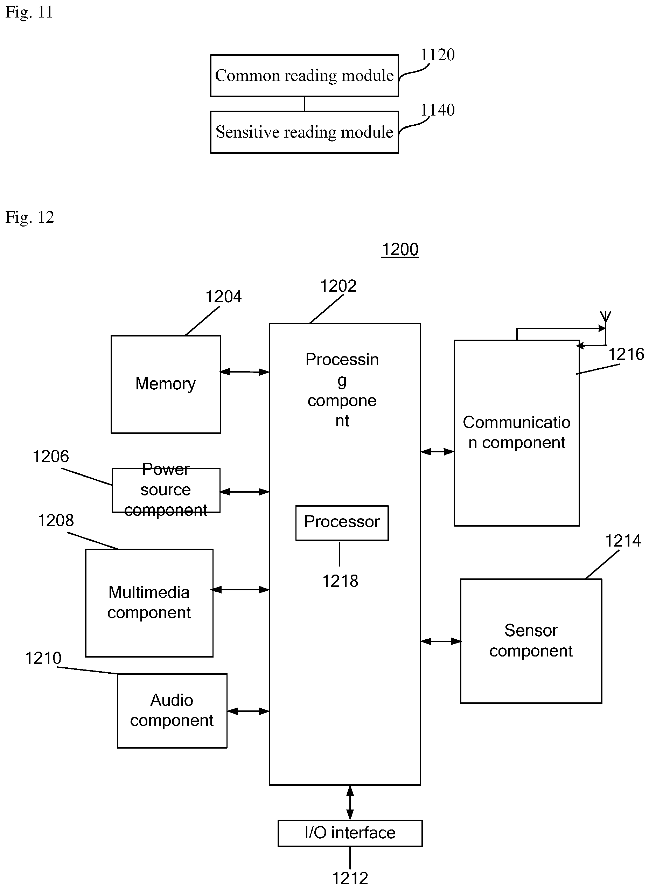

Since SMSs in the SMS component are divided into SMSs carrying sensitive information and common SMSs, there are two situations in whch the third party application also reads an SMS in the SMSs, please refer to the following modules, as shown in Fig. 11:
a common reading module 1120, configured to read a common SMS for a third party application, wherein a time difference between a reading time of the common SMS and a receiving time of the common SMS is smaller than a preset duration; and
a sensitive reading module 1140, configured to read an SMS carrying sensitive information for the third party application, wherein a time difference between a reading time of the SMS and a receiving time of the SMS is larger than the preset duration;
wherein the preset duration is equal to or smaller than an active duration of an SMS.

The default SMS application of the operating system reads a common SMS and an SMS carrying sensitive information in only one situation, please refer to the following module:
a default reading module, configured to read an SMS for the default SMS application of the operating system, wherein a time difference between a reading time of the SMS and a receiving time of the SMS is smaller than a preset duration (not shown in the figure).

Specific methods for modules in the devices in the embodiments above to execute operations have been expounded in the embodiments related to the method, and will not be elaborated and described in details herein.

An embodiment of the present disclosure further provides an SMS reading device. The device may be configured to implement an SMS reading method provided by an embodiment of the present disclosure. The device includes: a processor; and a memory configured to store an instruction executable by the processor,
wherein the processor is configured to:
receive from a third party application a reading request of reading an SMS;
when the SMS is an SMS carrying sensitive information, detect whether a reading time in the reading request is in an access prohibition period of the SMS; and
when the reading time is in the access prohibition period, not respond to the reading request.

An embodiment of the present disclosure further provides an SMS reading device. The device may be configured to implement an SMS reading method provided by an embodiment of the present disclosure. The device includes: a processor; and a memory configured to store an instruction executable by the processor,
wherein the processor is configured to:
read a common SMS for a third party application, wherein a time difference between a reading time of the common SMS and a receiving time of the common SMS is smaller than a preset duration;
read an SMS carrying sensitive information for the third party application, wherein a time difference between a reading time of the SMS and a receiving time of the SMS is larger than the preset duration.

Fig. 12 is a block diagram of an SMS reading device according to an exemplary embodiment. For example, the device 1200 may be a mobile phone, a computer, a digital broadcasting terminal, a message transceiver, a game console, a tablet device, a medical device, a fitness device, a personal digital assistant and so on.

Referring to Fig. 12, the device 1200 may include one or more of the following components: a processing component 1202, a memory 1204, a power source component 1206, a multimedia component 1208, an audio component 1210, an Input/Output (I/O) interface 1212, a sensor component 1214 and a communication component 1216.

Generally, the processing component 1202 controls overall operations of the device 1200, such as operations associated with display, a telephone call, data communication, a camera operation and a recording operation. The processing component 1202 may include one or more processors 1218 to execute instructions so as to perform all or part of the steps of the method. Besides, the processing component 1202 may include one or more modules, so as to process interaction between the processing component 1202 and other components. For example, the processing component 1202 may include a multimedia module so as to facilitate interaction between the multimedia component 1208 and the processing component 1202.

The memory 1204 is configured to store various types of data so as to support operations in the device 1200. Examples of such data include an instruction of any application or method operated on the device 1200, contact data, data of a telephone directory, a message, a picture, a video and so on. The memory 1204 may be implemented using any type of volatile or non-volatile storage devices or a combination thereof, such as a Static Random-Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic disk or an optical disk.

The power source component 1206 provides power for various components of the device 1200. The power source component 1206 may include a power source management system, one or more power sources, and other components associated with power generation, management and distribution of the device 1200.

The multimedia component 1208 includes a screen providing an output interface between the device 1200 and a user. In some embodiments, the screen may include a Liquid Crystal Display (LCD) and a Touch Panel (TP). When the screen includes the TP, the screen may be implemented as a touch screen to receive an input signal from the user. The TP includes one or more touch sensors so as to sense a touch, a slide, and a gesture on the TP. The touch sensor may not only sense a touch or a boundary of a slide, but also detect a duration and a pressure related to the touch or the slide. In some embodiments, the multimedia component 1208 includes a front camera and/or a rear camera. When the device 1200 is in an operation mode, such as a camera mode or a video mode, the front camera and/or the rear camera may receive external multimedia data. Each front camera and each rear camera may be a fixed optical lens system or have focus and optical zoom capability.

The audio component 1210 is configured to output and/or input an audio signal. For example, the audio component 1210 includes a Microphone (MIC). When the device 1200 is in an operation mode, such as a calling mode, a recording mode and a voice recognition mode, the MIC is configured to receive an external audio signal. The received audio signal may be further stored in the memory 1204 or sent by the communication component 1216. In some embodiments, the audio component 1210 further includes a loudspeaker, configured to output the audio signal.

The I/O interface 1212 provides an interface between the processing component 1202 and peripheral interface modules. The peripheral interface modules may be a keyboard, a click wheel, buttons and so on. These buttons may include, but are not limited to a homepage button, a volume button, a start button and a lock button.

The sensor component 1214 includes one or more sensors configured to provide status assessments of various aspects of the device 1200. For example, the sensor component 1214 may detect an open/closed state of the device 1200, and the relative locations of the components. For example, the components are the display and the keypad of the device 1200. The sensor component 1214 may further detect a change in position of the device 1200 or a component of the device 1200, the presence of contact between the user and the device 1200, an orientation or an acceleration/deceleration of the device 1200 and a change in the temperature of the device 1200. The sensor component 1214 may include a proximity sensor, configured to detect the presence of a nearby object without any physical contact. The sensor component 1214 may further include an optical sensor, such as a Complementary Metal Oxide Semiconductor (CMOS) or Charge Coupled Device (CCD) image sensor used in an imaging application. In some embodiments, the sensor component 1214 may further include an acceleration sensor, a gyro sensor, a magnetic sensor, a pressure sensor or a temperature sensor.

The communication component 1216 is configured to facilitate wired or wireless communication between the device 1200 and other devices. The device 1200 may be accessed into a wireless network based on a communication standard, such as Wireless Fidelity (WiFi), the second Generation (2G) or the third Generation (3G), or a combination thereof. In an exemplary embodiment, the communication component 1216 receives a broadcast signal from an external broadcast management system or broadcast related information through a broadcast channel. In an exemplary embodiment, the communication component 1216 further includes a Near Field Communication (NFC) module so as to promote short distance communication. For example, the NFC module may be implemented based on a Radio-frequency Identification (RFID) technology, an Infrared Data Association (IrDA) technology, an Ultra Wide Band (UWB) technology, a Bluetooth (BT) technology and other technologies.

In an exemplary embodiment, the device 1200 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, or other electronic components, so as to execute the SMS reading method above.

In exemplary embodiments, there is also provided a non-transitory computer-readable storage medium including instructions, such as included in the memory 1204, executable by the processor 1218 of the device 1200, for performing the SMS reading method above. For example, the non-temporary computer readable storage medium may be a ROM, a Random-Access Memory (RAM), a Compact Disc-ROM (CD-ROM), a magnetic tape, a floppy disk, an optical data memory and so on.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

### INDUSTRY APPLICABILITY

In the embodiments of the present disclosure, a reading request of reading an SMS is received from a third party application; when the SMS is an SMS carrying sensitive information, whether a reading time of the reading request is in an access prohibition period of the SMS is detected, and when the reading time is in the access prohibition period, the reading request is not responded, so that the problem that a malicious application can read a verification code in an SMS to acquire an authority of executing a sensitive operation due to the reason that a third party application only having an SMS reading authority at the operating system level can read the SMS content in an SMS component is solved, and for an SMS carrying sensitive information, a third party application cannot read the SMS content of the SMS during an access prohibition period, thus avoiding leakage of the sensitive information in the SMS during the access prohibition period while implementing authority control over a single SMS granularity.

## Claims

1. A method for reading a Short Message Service, SMS, **characterized in that**, the method comprises:
receiving (304), by an operating system of a mobile device, a reading request of reading an SMS stored on an SMS component of the mobile device, wherein the reading request is received from a third party application running on the mobile device;
determining (305), by the operating system, whether the third party application is approved to read the SMS based on an SMS reading authority list stored in the operating system; wherein the operating system determines that the third party application is approved to read the SMS if the third party application is included in the SMS reading authority;
forwarding (307), by the operating system, the reading request to the SMS component, when the operating system determines that the third party application is approved to read the SMS;
determining (309), by the SMS component, whether the SMS is an SMS carrying sensitive information;
detecting (311), by the SMS component, when the SMS is an SMS carrying sensitive information, whether a reading time in the reading request is in an access prohibition period corresponding to the SMS; and
withholding (312), by the SMS component, transmission of a response back to the third party application in response to the reading request, when the reading time is in the access prohibition period.

2. The method according to claim 1, wherein the step of detecting (311), by the SMS component, when the SMS is an SMS carrying sensitive information, whether a reading time in the reading request is in an access prohibition period corresponding to the SMS comprises:
detecting, by the SMS component, whether a time difference between the reading time in the reading request and a receiving time of the SMS is smaller than a preset threshold; and
when the time difference is smaller than the preset threshold, determining by the SMS component that the reading time is in the access prohibition period.

3. The method according to claim 2, further comprising:
setting, by the SMS component, the preset threshold according to a default active duration;
or,
extracting, by the SMS component, an active duration of the SMS from an SMS content of the SMS, and setting the preset threshold according to the active duration.

4. The method according to any one of claim 1 to 3, before the receiving (304), by the operating system of the mobile device, the reading request of reading the SMS stored on the mobile device, the method further comprises:
identifying, by the SMS component, whether the SMS is an SMS carrying sensitive information; and
when the SMS is an SMS carrying sensitive information, adding, by the SMS component, a preset marker to the SMS, wherein the preset marker is configured to indicate that the SMS is an SMS carrying sensitive information.

5. The method according to claim 4, wherein the step of identifying whether the SMS is an SMS carrying sensitive information comprises:
identifying, by the SMS component, according to characteristic information of the SMS, whether the SMS is an SMS carrying sensitive information, wherein the characteristic information comprises at least one of a sender number, an SMS content and an SMS template.

6. The method according to any one of claims 1 to 5, further comprising:
receiving, by the SMS component, from a default SMS application of the operating system, a reading request of reading the SMS; and
responding, by the SMS component, to the reading request of the default SMS application.

7. A Short Message Service, SMS, reading device, **characterized in that**, the SMS reading device comprises:
an SMS identifying module(910), a request receiving module (930), a time detecting module (950), and a request responding module (960);
wherein the SMS identifying module(910) is configured to determine whether an SMS stored on an SMS component of the SMS reading device is an SMS carrying sensitive information;
the request receiving module (930) comprises:
a reading receiving sub-module (931) configured to receive a reading request of reading the SMS, wherein the reading request is received from a third party application running on the SMS reading device through an operating system of the SMS reading device;
an authority detecting sub-module (932) configured to determine, through the operating system, whether the third party application is approved to read the SMS based on an SMS reading authority list stored in the operating system; wherein the operating system determines that the third party application is approved to read the SMS if the third party application is included in the SMS reading authority;
a request forwarding sub-module (933) configured to forward, through the operating system, the reading request to the SMS component, when the operating system determines that the third party application is approved to read the SMS; and
an information receiving sub-module (934) configured to receive, through the SMS component, the reading request forwarded by the operating system;
the time detecting module (950) is configured to detect, when the SMS is an SMS carrying sensitive information, whether a reading time in the reading request is in an access prohibition period of the SMS, and
the request responding module (960) is configured to withhold transmission of a response back to the third party application in response to the reading request, when the reading time is in the access prohibition period.

8. The Short Message Service, SMS, reading device of claim 7, comprising:
a processor; and
a memory, configured to store an instruction executable by the processor;
wherein the processor is configured to include the SMS identifying module(910), the request receiving module (930), the time detecting module (950), the request responding module (960).

9. A computer program including instructions for executing the steps of a method for reading a Short Message Service, SMS, according to any one of claims 1 to 6 when said program is executed by a computer.

## Patentansprüche

1. Verfahren zum Lesen eines Short Message Service, einer SMS, **dadurch gekennzeichnet, dass** das Verfahren folgendes umfasst:
durch ein Betriebssystem einer mobilen Vorrichtung Empfangen (304) einer Leseanforderung des Lesens einer SMS, die auf einer SMS-Komponente der mobilen Vorrichtung gespeichert ist, wobei die Leseanforderung von einer Drittanbieteranwendung empfangen wird, die auf der mobilen Vorrichtung läuft;
durch das Betriebssystem Bestimmen (305), ob die Drittanbieteranwendung zugelassen ist, die SMS basierend auf einer SMS-Leseberechtigungsliste zu lesen, die in dem Betriebssystem gespeichert ist, wobei das Betriebssystem bestimmt, dass die Drittanbieteranwendung zugelassen ist, die SMS zu lesen, wenn die Drittanbieteranwendung in der SMS-Leseberechtigung enthalten ist;
durch das Betriebssystem Weiterleiten (307) der Leseanforderung an die SMS-Komponente, wenn das Betriebssystem bestimmt, dass die Drittanbieteranwendung zugelassen ist, die SMS zu lesen;
durch die SMS-Komponente Bestimmen (309), ob die SMS eine SMS ist, die sensible Information trägt;
durch die SMS-Komponente Erfassen (311), wenn die SMS eine SMS ist, die sensible Information trägt, ob eine Lesezeit in der Leseanforderung in einem Zugriffsverbotszeitraum ist, der der SMS entspricht; und
durch die SMS-Komponente Zurückhalten (312) einer Übertragung einer Antwort bzw. Reaktion zurück zu der Drittanbieteranwendung in Reaktion auf die Leseanforderung, wenn die Lesezeit in dem Zugriffsverbotszeitraum ist.

2. Verfahren nach Anspruch 1, wobei der Schritt des Erfassens (311) durch die SMS-Komponente, wenn die SMS eine SMS ist, die sensible Information trägt, ob eine Lesezeit in der Leseanforderung in einem Zugriffsverbotszeitraum ist, der der SMS entspricht, folgendes umfasst:
durch die SMS-Komponente Erfassen, ob ein Zeitunterschied zwischen der Lesezeit in der Leseanforderung und einer Empfangszeit der SMS kleiner als ein voreingestellter Schwellwert ist; und
wenn der Zeitunterschied kleiner als der voreingestellte Schwellwert ist, durch die SMS-Komponente Bestimmen, dass die Lesezeit in dem Zugriffsverbotszeitraum ist.

3. Verfahren nach Anspruch 2, das ferner folgendes umfasst:
durch die SMS-Komponente Einstellen des voreingestellten Schwellwertes gemäß einer vorgegebenen aktiven Dauer;
oder
durch die SMS-Komponente Extrahieren einer aktiven Dauer der SMS von einem SMS-Inhalt der SMS und Einstellen des voreingestellten Schwellwertes gemäß der aktiven Dauer.

4. Verfahren nach einem der Ansprüche 1 bis 3, wobei das Verfahren vor dem Empfangen (304) durch das Betriebssystems der mobilen Vorrichtung der Leseanforderung des Lesens der SMS, die auf der mobilen Vorrichtung gespeichert ist, ferner folgendes umfasst:
durch die SMS-Komponente Identifizieren, ob die SMS eine SMS ist, die sensible Information trägt; und
wenn die SMS eine SMS ist, die sensible Information trägt, durch die SMS-Komponente Hinzufügen eines voreingestellten Markers zu der SMS, wobei der voreingestellte Marker konfiguriert ist, anzugeben, dass die SMS eine SMS ist, die sensible Information trägt.

5. Verfahren nach Anspruch 4, wobei der Schritt des Identifizierens, ob die SMS eine SMS ist, die sensible Information trägt, folgendes umfasst:
durch die SMS-Komponente gemäß einer charakteristischen Information der SMS Identifizieren, ob die SMS sensible Infomration trägt, wobei die charakteristische Information zumindest eines von einer Sendernummer, einem SMS-Inhalt und einer SMS-Vorlage aufweist.

6. Verfahren nach einem der Ansprüche 1 bis 5, das ferner folgendes umfasst:
durch die SMS-Komponente Empfangen einer Leseanforderung des Lesens der SMS von einer vorgegebenen SMS-Anwendung des Betriebssystems; und
durch die SMS-Komponente Antworten auf die Leseanforderung der vorgegebenen SMS-Anwendung.

7. Short Message Service-, SMS-, Lesevorrichtung, **dadurch gekennzeichnet, dass** die SMS-Lesevorrichtung folgendes aufweist:
ein SMS-identifizierendes Modul (910), ein Anforderungs-empfangendes Modul (930), ein Zeit-erfassendes Modul (950) und ein Anforderungs-antwortendes Modul (960);
wobei das SMS-identifizierende Modul (910) konfiguriert ist zu bestimmen, ob eine SMS, die auf einer SMS-Komponente der SMS-Lesevorrichtung gespeichert ist, eine SMS ist, die sensible Information trägt;
wobei das Anforderungs-empfangende Modul (930) folgendes aufweist:
ein Leseempfangs-Submodul (931), das konfiguiert ist, eine Leseanforderung des Lesens der SMS zu empfangen, wobei die Leseanforderung von einer Drittanbieteranwendung empfangen wird, die auf der SMS-Lese-Vorrichtung läuft, durch ein Betriebssystem der SMS-Lesevorrichtung;
ein Berechtigungserfassungs-Submodul (932), das konfiguriert ist durch das Betriebssystem zu bestimmen, ob die Drittanbieteranwendung zugelassen ist, die SMS zu lesen basierend auf einer SMS-Leseberechtigungsliste, die in dem Betriebssystem gespeichert ist; wobei das Betriebssystem bestimmt, dass die Drittanbieteranwendung zugelassen ist, die SMS zu lesen, wenn die Drittanbieteranwendung in der SMS-Leseberechtigung enthalten ist;
ein Anforderungs-Weiterleitungs-Submodul (933), das konfiguriert ist, durch das Betriebssystem, die Leseanforderung an die SMS-Komponente weiterzuleiten, wenn das Betriebssystem bestimmt, dass die Drittanbieteranwendung zugelassen ist, die SMS zu lesen; und
ein Informationsempfangs-Submodul (934), das konfiguriert ist, durch die SMS-Komponente die Leseanforderung zu empfangen, die von dem Betriebssystem weitergeleitet worden ist;
wobei das Zeit-erfassende Modul (950) konfiguriert ist zu erfassen, wenn die SMS eine SMS ist, die sensible Information trägt, ob die Lesezeit in der Leseanforderung in einem Zugriffsverbotszeitraum der SMS ist und
wobei das Anforderungsreaktionsmodul (960) konfiguriert ist, eine Übertragung einer Antwort zurück zu der Drittanbieteranwendung in Reaktion auf die Leseanforderung zurückzuhalten, wenn die Lesezeit in der Zugriffsverbotszeitdauer ist.

8. Short Message Service-, SMS-, Lesevorrichtung nach Anspruch 7, die folgendes aufweist:
einen Prozessor; und
einen Speicher, der konfiguriert ist, eine Instruktion zu speichern, die von dem Prozessor ausführbar ist;
wobei der Prozessor konfiguriert ist, das SMS-identifizierende Modul (910), das Anforderungs-empfangende Modul (930), das Zeit-erfassende Modul (950), das Anforderungs-antwortende Modul (960) zu enthalten.

9. Computerprogramm, das Instruktionen zum Ausführen der Schritte eines Verfahrens zum Lesen eines Short Message Service, einer SMS, nach einem der Ansprüche 1 bis 6 auszuführen, wenn das Programm von einem Computer ausgeführt wird.

## Revendications

1. Procédé pour lire un service de minimessages, SMS, **caractérisé en ce que** le procédé comporte les étapes consistant à :
recevoir (304), par un système d'exploitation d'un dispositif mobile, une requête de lecture pour lire un SMS mémorisé sur un composant de SMS du dispositif mobile, dans lequel la requête de lecture est reçue d'une application tierce s'exécutant sur le dispositif mobile ;
déterminer (305), par le système d'exploitation, si l'application tierce est approuvée pour lire le SMS sur la base d'une liste d'autorisations de lecture de SMS mémorisée dans le système d'exploitation ; dans lequel le système d'exploitation détermine que l'application tierce est approuvée pour lire le SMS si l'application tierce est incluse dans l'autorisation de lecture de SMS ;
transférer (307), par le système d'exploitation, la requête de lecture au composant de SMS, lorsque le système d'exploitation détermine que l'application tierce est approuvée pour lire le SMS ;
déterminer (309), par le composant de SMS, si le SMS est un SMS porteur d'informations sensibles ;
détecter (311), par le composant de SMS, lorsque le SMS est un SMS porteur d'informations sensibles, si un temps de lecture dans la requête de lecture se situe dans une période d'interdiction d'accès correspondant au SMS ; et
refuser ou contentir (312), par le composant de SMS, la retransmission d'une réponse vers l'application tierce en réponse à la requête de lecture, lorsque le temps de lecture se situe dans la période d'interdiction d'accès.

2. Procédé selon la revendication 1, dans lequel l'étape consistant à détecter (311), par le composant de SMS, lorsque le SMS est un SMS porteur d'informations sensibles, si un temps de lecture dans la requête de lecture est dans une période d'interdiction d'accès correspondant au SMS comporte les étapes consistant à :
détecter, par le composant de SMS, si une différence de temps entre le temps de lecture dans la requête de lecture et un temps de réception du SMS est inférieur à un seuil préréglé ; et
lorsque la différence de temps est plus petite que le seuil préréglé, déterminer par le composant de SMS que le temps de lecture est dans la période d'interdiction d'accès.

3. Procédé selon la revendication 2, comportant en outre les étapes consistant à :
fixer, par le composant de SMS, le seuil préréglé en fonction d'une durée active par défaut ;
ou,
extraire, par le composant de SMS, une durée active du SMS à partir d'un contenu de SMS du SMS, et fixer le seuil préréglé en fonction de la durée active.

4. Procédé selon l'une quelconque des revendications 1 à 3, dans lequel, avant de recevoir (304), par le système d'exploitation du dispositif mobile, la requête de lecture pour lire le SMS mémorisé sur le dispositif mobile, le procédé comporte en outre les étapes consistant à :
identifier, par le composant de SMS, si le SMS est un SMS porteur d'informations sensibles ; et
lorsque le SMS est un SMS porteur d'informations sensibles, ajouter, par le composant de SMS, un marqueur préétabli au SMS, dans lequel le marqueur préétabli est configuré pour indiquer que le SMS est un SMS porteur d'informations sensibles.

5. Procédé selon la revendication 4, dans lequel l'étape consistant à identifier si le SMS est un SMS porteur d'informations sensibles comporte l'étape consistant à :
identifier, par le composant de SMS, en fonction d'informations caractéristiques du SMS, si le SMS est un SMS porteur d'informations sensibles, dans lequel les informations caractéristiques comportent au moins un élément parmi un numéro d'émetteur, un contenu de SMS et un modèle de SMS.

6. Procédé selon l'une quelconque des revendications 1 à 5, comportant en outre les étapes consistant à :
recevoir, par le composant de SMS, à partir d'une application de SMS par défaut du système d'exploitation, une requête de lecture pour lire le SMS ; et
répondre, par le composant de SMS, à la requête de lecture de l'application de SMS par défaut.

7. Dispositif de lecture de service de minimessages, SMS, **caractérisé en ce que** le dispositif de lecture de SMS comporte :
un module d'identification de SMS (910), un module de réception de requête (930), un module de détection de temps (950) et un module de réponse à une requête (960) ;
dans lequel le module d'identification de SMS (910) est configuré pour déterminer si un SMS mémorisé sur un composant de SMS du dispositif de lecture de SMS est un SMS porteur d'informations sensibles ;
le module de réception de requête (930) comporte :
un sous-module de réception de lecture (931) configuré pour recevoir une requête de lecture pour lire le SMS, dans lequel la requête de lecture est reçue d'une application tierce s'exécutant sur le dispositif de lecture de SMS via un système d'exploitation du dispositif de lecture de SMS ;
un sous-module de détection d'autorisation (932) configuré pour déterminer, via le système d'exploitation, si l'application tierce est approuvée pour lire le SMS sur la base d'une liste d'autorisations de lecture de SMS mémorisée dans le système d'exploitation ; dans lequel le système d'exploitation détermine que l'application tierce est approuvée pour lire le SMS si l'application tierce est incluse dans l'autorisation de lecture de SMS ;
un sous-module de transfert de requête (933) configuré pour transférer, via le système d'exploitation, la requête de lecture au composant de SMS, lorsque le système d'exploitation détermine que l'application tierce est approuvée pour lire le SMS ; et
un sous-module de réception d'informations (934) configuré pour recevoir, via le composant de SMS, la requête de lecture transférée par le système d'exploitation ;
le module de détection de temps (950) est configuré pour détecter, lorsque le SMS est un SMS porteur d'informations sensibles, si un temps de lecture dans la requête de lecture est dans une période d'interdiction d'accès du SMS, et le module de réponse à une requête (960) est configuré pour refuser ou contenir une retransmission d'une réponse à l'application tierce en réponse à la requête de lecture, lorsque le temps de lecture est dans la période d'interdiction d'accès.

8. Dispositif de lecture de service de minimessages, SMS, selon la revendication 7, comportant :
un processeur ; et
une mémoire configurée pour stocker une instruction exécutable par le processeur ;
dans lequel le processeur est configuré pour inclure le module d'identification de SMS (910), le module de réception de requête (930), le module de détection de temps (950) et le module de réponse à une requête (960).

9. Programme informatique incluant des instructions pour exécuter les étapes d'un procédé pour lire un service de minimessages, SMS, selon l'une quelconque des revendications 1 à 6 lorsque ledit programme est exécuté par un ordinateur.
